(19) Europäisches Patentamt
European Patent Office
Office européen des brevets

(11) EP 4 322 109 A1

(12) EUROPEAN PATENT APPLICATION
published in accordance with Art. 153(4) EPC

(43) Date of publication:
14.02.2024 Bulletin 2024/07

(51) International Patent Classification (IPC):
G06T 7/11 (2017.01)          G06T 7/12 (2017.01)
G06T 7/194 (2017.01)

(21) Application number: 23712437.5

(22) Date of filing: 30.03.2023

(86) International application number:
PCT/CN2023/085016

(87) International publication number:
WO 2024/001360 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.06.2022 CN 202210751949

(71) Applicant: Beijing Zitiao Network Technology Co., Ltd.
Beijing 100190 (CN)

(72) Inventors:
• LIU, Jiyang
  Beijing 100086 (CN)
• LI, Shanglin
  Beijing 100086 (CN)

(74) Representative: Dentons UK and Middle East LLP
One Fleet Place
London EC4M 7WS (GB)

(54) **GREEN SCREEN MATTING METHOD AND APPARATUS, AND ELECTRONIC DEVICE**

(57) The present disclosure relates to green screen matting method, apparatus and electronic device, in particular to the technical field of image processing. The method comprises: acquiring a first image; inputting the first image into a target parameter prediction model, and acquiring a target parameter map based on the target parameter prediction model, wherein the target parameter map comprises transparency adjustment parameters for at least part of pixels in the first image; determining a target opacity map for the foreground image in the first image, based on the transparency adjustment parameters for the at least part of pixels and center color distances of the at least part of pixels; calculating the foreground image based on the target opacity map and a color value of the first image.

acquiring a first image — 101

inputting the first image into a target parameter prediction model, and acquiring a target parameter map based on the target parameter prediction — 102

determining a target opacity map for the foreground image in the first image, based on the transparency adjustment parameters for the at least part of pixels and center color distances of the at least part of pixels — 103

calculating the foreground image based on the target opacity map and a color value of the first image — 104

Fig. 1

**Description**

**CROSS-REFERENCE OF RELATED APPLICATION**

This disclosure claims the priority of a Chinese patent application No. 202210751949.X filed in China Patent Office on June 28, 2022, which is hereby incorporated by reference in its entirety.

**FIELD OF THE INVENTION**

The present disclosure relates to the technical field of image processing, in particular to a green screen matting method, apparatus and electronic device.

**BACKGROUND**

Green screen matting generally includes two parts: matting to obtain foreground alpha, and foreground de-greening. The purpose of obtaining foreground alpha is to separate the foreground from the background. Foreground de-greening mainly performs de-greening for green reflections at semi-transparent areas, segmented edges and foreground objects, so as to superimpose other backgrounds for material synthesis. At present, some adjustment parameters are used in the process of green screen matting, and such adjustment parameters are often applied in a global scope, however, due to uneven illumination and uneven green screen, etc., different areas in the image often have different requirements for these adjustment parameters. Therefore, in the process of green screen matting, a case in which the adjustment parameters are used as global parameters has limitations, which leads to poor matting accuracy when the green screen matting is performed for a partial scence, so that a finally obtained foreground image is inaccurate.

**DISCLOSURE OF THE INVENTION**

To solve the above technical problems or at least partially solve the above technical problems, the present disclosure provides a green screen matting method, apparatus and electronic device, which can determine, based on pixels in an image, corresponding transparency adjustment parameters, determine a target opacity map for a foreground image, and determine the foreground image based on the target opacity map. Therefore, the green screen matting method can be used to calculate the accurate foreground image in any scene.

To achieve the above purpose, the technical solution provided by an embodiment of the present disclosure is as follows:

In a first aspect, a green screen matting method is provided, which comprises:

acquiring a first image;
inputting the first image into a target parameter prediction model, and acquiring a target parameter map based on the target parameter prediction model, wherein the target parameter map comprises transparency adjustment parameters for at least part of pixels in the first image;
determining a target opacity map for the foreground image in the first image, based on the transparency adjustment parameters for the at least part of pixels and center color distances of the at least part of pixels;
calculating the foreground image based on the target opacity map and a color value of the first image.

In some embodiments of the present disclosure, the transparency adjustment parameters comprise foreground adjustment parameters and/or background adjustment parameters.

In some embodiments of the present disclosure, the determining a target opacity map for the foreground image in the first image, based on the transparency adjustment parameters for the at least part of pixels and center color distances of the at least part of pixels comprises:

determining an initial opacity map for the foreground image in the first image, based on the transparency adjustment parameters for the at least part of pixels and center color distances of the at least part of pixels;
performing guide filtering on the initial opacity map by taking a grayscale image of the first image as a guide image, to obtain the target opacity map.

In some embodiments of the present disclosure, the calculating the foreground image based on the target opacity map and a color value of the first image comprises:

acquiring a fusion opaque coefficient;

calculate a color value of the foreground image, based on the fusion opaque coefficient, the color value of the first image, and a color value of the background image.

In some embodiments of the present disclosure, the acquiring a fusion opaque coefficient comprises:

determining that the fusion opaque coefficient is 1, when a color value of G channel in the first image is less than or equal to a target color value,
determining the fusion opaque coefficient based on a first color distance and a second color distance when the color value of the G channel in the first image is larger than the target color value, wherein the first color distance is a distance from the color value in the first image to a green limit boundary plane, and the second color distance is a distance from the background color average to the green limit boundary plane;
wherein the target color value is the sum of color values of R channel and B channel, and the green limit boundary plane is a plane determined when the color value of G channel is equal to the target color value.

In some embodiments of the present disclosure, before inputting the first image into a target parameter prediction model, and acquiring a target parameter map based on the target parameter prediction model, the method further comprises:

training an initial parameter prediction model based on sample information to obtain the target parameter prediction model;
the sample information includes a plurality of sample images and a first parameter map corresponding to each sample image, wherein the sample images include a foreground image, a background image and a random green screen image; the first parameter map is a parameter map determined based on an UV coordinate vector of the foreground image pixels, an UV coordinate vector of the random green screen image pixels, and center color distances of the pixels; and/or, a parameter map determined based on an UV coordinate vector of the background image pixels, an UV coordinate vector of the random green screen image pixels, and center color distances of the pixels; the random green screen image is obtain by fusing color channels of the foreground image and the background image based on alpha of the foreground image; the background image is obtained by superimposing random green on a real picture.

In some embodiments of the present disclosure, the training an initial parameter prediction model based on sample information to obtain the target parameter prediction model comprises:
executing the following steps at least once to obtain the target parameter prediction model:

acquiring a target sample image from the plurality of sample images, inputting the target sample image into the initial parameter prediction model, and acquiring an output parameter map of the target sample image output by the initial image processing model;
dtermining a target loss function based on the output parameter map and the first parameter map corresponding to the target sample image;
modifying the initial parameter prediction model based on the target loss function;
wherein, the target loss function comprises:

a first loss function corresponding to the foreground adjustment parameters; and/or,
a second loss function corresponding to the background adjustment parameters.

In some embodiments of the present disclosure, the modifying the initial parameter prediction model based on the target loss function includes:

determining a first opacity map of the foreground image of the target sample image based on the output parameter map;
determining a second opacity map of the foreground image of the target sample image based on the first parameter map corresponding to the target sample image;
determining a third loss function based on the first opacity map and the second opacity map;
modifying the initial parameter prediction model based on the target loss function and the third loss function.

In a second aspect, there is provided a green screen matting apparatus, comprising:

an acquisition module configured to acquire a first image;

a prediction module configured to input the first image into a target parameter prediction model, and acquire a target parameter map based on the target parameter prediction model, wherein the target parameter map comprises transparency adjustment parameters for at least part of pixels in the first image;

a determination module configured to determine a target opacity map for the foreground image in the first image, based on the transparency adjustment parameters for the at least part of pixels and center color distances of the at least part of pixels;

a matting module configured to calculate the foreground image based on the target opacity map and a color value of the first image.

In a third aspect, it is provided an electronic device, which comprises a processor and a memory on which computer programs are stored, wherein the computer programs, when executed by the processor, implement the green screen matting method according to the first aspect or any embodiment of the present disclosure.

In a fourth aspect, it is provided a computer-readable storage medium having computer programs stored thereon, that, when executed by a processor, implement the green screen matting method according to the first aspect or any embodiment of the present disclosure.

In a fifth aspect, it is provided a computer program product comprising computer programs or instructions that, when executed by a processor, implement the green screen matting method according to the first aspect or any embodiment of the present disclosure.

In a sixth aspect, it is provided a computer program including program codes that, when executed by a computer, causes the computer to implement the green screen matting method according to the first aspect or any embodiment of the present disclosure.

The green screen matting method provided by embodiments of the present disclosure comprises the following steps: acquiring a first image; inputting the first image into a target parameter prediction model, and acquiring a target parameter map based on the target parameter prediction model, wherein the target parameter map comprises transparency adjustment parameters for at least part of pixels in the first image; determining a target opacity map for the foreground image in the first image, based on the transparency adjustment parameters for the at least part of pixels and center color distances of the at least part of pixels; calculating the foreground image based on the target opacity map and a color value of the first image. By means of the solution, in the process of acquiring the opacity map of the foreground image, the transparency adjustment parameters for at least part of pixels in the first image can be first obtained through the target parameter prediction model, so that even for the images with uneven illumination and uneven green screen, since local parameters (transparency adjustment parameters) are determined based on the pixels, the opacity map of the foreground image is determined based on these local parameters, and then the foreground image of the first image is calculated based on the opacity map of the foreground image and the color value of the first image, so that an accurate foreground image can be calculated in any scence by means of the green screen matting method.

## DESCRIPTION OF THE DRAWINGS

The accompanying drawings, which are incorporated into and constitute a part of this specification, illustrate embodiments consistent with this disclosure and, together with the description, serve to explain the principles of this disclosure.

In order to more clearly explain the embodiments of this disclosure or the technical solutions in the prior art, the following will briefly introduce the drawings that need to be used in the description of the embodiments or the prior art. Obviously, for those ordinary skilled in the field, other drawings can be obtained according to these drawings without paying creative effort.

Fig. 1 is a flowchart of a green screen matting method according to an embodiment of the present disclosure;
Fig. 2 is a schematic diagram of t1, t2 and d in UV coordinates according to an embodiment of the present disclosure;
Fig. 3 is a schematic diagram of a process of obtaining a target parameter map according to an embodiment of the present disclosure;
Fig. 4 is a schematic diagram of calculating a target opacity map of a foreground image according to an embodiment of the present disclosure;
Fig. 5 is a schematic diagram of a green limit boundary plane according to an embodiment of the present disclosure;
Fig. 6 is a structural block diagram of a green screen matting apparatus according to an embodiment of the present disclosure;
Fig. 7 is a schematic structural diagram of an electronic device according to an embodiment of the present disclosure.

## DETAILED DESCRIPTION OF PREFERRED EMBODIMENTS

In order to better understand the above objects, features and advantages of the present disclosure, the solution of the present disclosure will be further described below. It should be noted that the embodiments of the present disclosure and the features in the embodiments can be combined with each other without conflict.

In the following description, many specific details are set forth in order to fully understand the present disclosure, but the present disclosure can also be implemented in other ways than those described here; Obviously, the embodiments in the specification are only part of the embodiments of this disclosure, but not all of them.

At present, some adjustment parameters are used in the process of green screen matting, and such adjustment parameters are often applied in a global scope, however, due to uneven illumination and uneven green screen, etc., different areas in the image often have different requirements for these adjustment parameters. Therefore, in the process of green screen matting, a case in which the adjustment parameters are used as global parameters has limitations, which leads to poor matting accuracy when the green screen matting is performed for a partial scence, so that a finally obtained foreground image is inaccurate.

In order to solve the above problems, embodiments of the present disclosure provide a green screen matting method. In the process of acquiring an opacity map of the foreground image, transparency adjustment parameters for at least part of pixels in a first image can be first obtained through a target parameter prediction model, so that even for the images with uneven illumination and uneven green screen, since local parameters (transparency adjustment parameters) are determined based on the pixels, the opacity map of the foreground image is determined based on these local parameters, and then the foreground image of the first image is calculated based on the opacity map of the foreground image and the color value of the first image, so that an accurate foreground image can be calculated in any scence by means of the green screen matting method.

The green screen matting method according to embodiments of the present disclosure can be realized by an electronic device or a green screen matting apparatus, and the green screen matting apparatus can be a functional module or a functional entity in the electronic device used for realizing the green screen matting method.

In the embodiments of the present disclosure, the above-mentioned electronic devices may include mobile phones, tablet computers, notebook computers, palm computers, vehicle-mounted terminals, wearable devices, ultra-mobile personal computer (UMPC), personal digital assistant (PDAs), personal computers (PCs), etc., which are not particularly limited in the embodiments of the present disclosure.

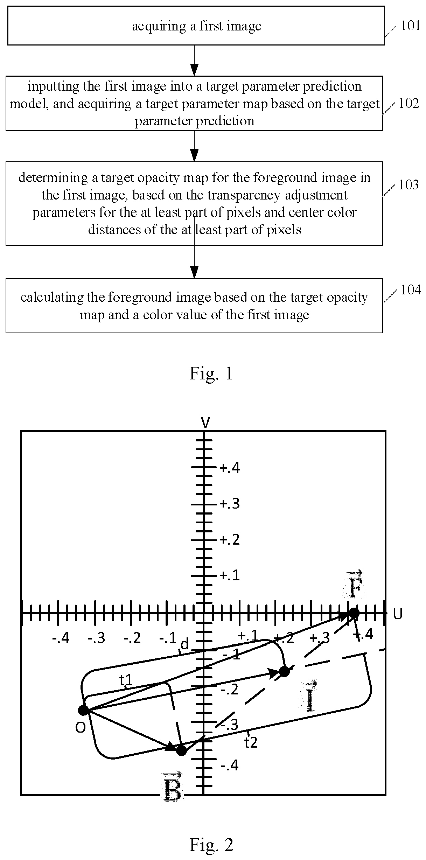

As shown in Fig. 1, a flowchart of a green screen matting method according to an embodiment of the present disclosure includes the following steps 101 to 104:

101. acquire a first image.

The first image can be any green screen image.

102. input the first image into a target parameter prediction model, and acquire a target parameter map based on the target parameter prediction model.

Wherein the target parameter map comprises transparency adjustment parameters for at least part of pixels in the first image. The above target parameter prediction model is a convolution neural network model.

In some embodiments, the transparency adjustment parameters include background adjustment parameters and/or foreground adjustment parameters.

The embodiments of the present disclosure provide two opacity calculation ways.

One way is that the alpha of the foreground image is equal to the product of a target difference and a global matting smoothness parameter, where the target difference is the difference between the center color distance of the pixel and a global matting intensity parameter, and the global matting smoothness parameter can be interpreted as the transparency adjustment parameter in the embodiments of the present disclosure.

Another way is that the alpha of the foreground image is equal to the ratio of a first difference and the second difference, the first difference is the difference between the center color distance of the pixel and a background adjustment parameter (hereinafter, it can be expressed as t1), and the second difference is the difference between the foreground adjustment parameter (hereinafter, it can be expressed as t2) and the background adjustment parameter. Among them, the background adjustment parameter is the color limit range for pure background, and the foreground adjustment parameter is the color limit range for pure foreground.

As shown in Fig. 2, Fig. 2 is a schematic diagram of t1, t2 and d in UV coordinates according to embodiments of the present disclosure. The physical meaning of t1 is the projection of UV coordinate vectors of background image pixels on UV coordinate vectors of composite image pixels. The physical meaning of t2 is the projection of the UV coordinate vectors of the foreground image pixels on the UV coordinate vectors of the composite image pixels. The center color distance is represented as d in Fig. 2, and the center color distance is the norm of the UV coordinate vector of the composite image pixel.

t1 is equal to the ratio of a first vector inner product to the center color distance, and t2 is equal to the ratio of a second vector inner product to the center color distance;

where, the first vector inner product is the inner product of the UV coordinate vector of the background image pixel and the UV coordinate vector of the composite image pixel. The second vector inner product is the inner product of the UV coordinate vector of the foreground image pixel and the UV coordinate vector of the composite image pixel.

The above $t1$ and/or $t2$ may refer to transparency adjustment parameters according to the embodiment of the present disclosure.

To calculate an accurate opacity map for the foreground image, it is necessary to determine an accurate parameter map first. For example, it is necessary to determine an accurate parameter map, such as an accurate parameter map for $s$, or an accurate parameter map for $t1$ and/or an accurate parameter map for $t2$.

In the disclosed embodiment, the accurate parameter map can be obtained through the target parameter prediction model, for example, the accurate parameter map for $s$ can be obtained, or the accurate parameter map for $t1$ and/or the parameter map for $t2$ can be obtained. Subsequently, the training process of the target parameter prediction model for acquiring the parameter map for $t1$ and the parameter map for $t2$ is explained as an example.

In some embodiments, before execution of step 102, an initial parameter prediction model can be trained based on sample information to obtain the target parameter prediction model.

Among them, the sample information includes a plurality of sample images and a first parameter map corresponding to each sample image, wherein the sample images include a foreground image, a background image and a random green screen image; the first parameter map is a parameter map determined based on an UV coordinate vector of the foreground image pixels, an UV coordinate vector of the random green screen image pixels, and center color distances of the pixels; and/or, a parameter map determined based on an UV coordinate vector of the background image pixels, an UV coordinate vector of the random green screen image pixels, and center color distances of the pixels; the random green screen image is obtain based on the alpha of the foreground image (i.e., the opacity map of the foreground image) by fusing color channels of the foreground image and the background image; the background image is obtained by superimposing random green on a real picture.

Through the above sample information, a target parameter prediction model that can predict the target parameter map of the image can be trained, so that in the subsequent image processing process, the transparency adjustment parameters corresponding to at least part of pixels in the image can be quickly obtained.

In some embodiments, the parameter map determined based on an UV coordinate vector of the foreground image pixels, an UV coordinate vector of the random green screen image pixels, and center color distances of the pixels is the parameter map for $t2$; and/or, the parameter map determined based on an UV coordinate vector of the background image pixels, an UV coordinate vector of the random green screen image pixels, and center color distances of the pixels is the parameter map for $t1$.

When obtaining the random green screen image, first, random green (that is, random green image) can be superimposed on the real image, to synthesize an uneven green screen image as the background image, and then an image is obtained as the foreground image. Based on the alpha of the foreground image, the color channel of the foreground image and the background image are fused to obtain the synthesized random green screen image. For each synthesized random green screen image, $t1$ and $t2$ corresponding to at least part of pixels in the whole image can be set in advance, so as to form the parameter map for $t1$ and the parameter map for $t2$ as labels, which can be combined with alpha (the opacity map of foreground image) for training.

The above-mentioned parameter map for $t1$ can be calculated in advance based on the pixel coordinates of pixels in the background image of the random green screen image (i.e. the above-mentioned uneven green screen image) and the pixel coordinates of pixels in the random green screen image, and the above-mentioned parameter map for $t2$ can be calculated based on the pixel coordinates of pixels in the foreground image of the random green screen image and the pixel coordinates of pixels in the random green screen image.

Furthermore, the training can be performed based on alpha (the opacity map of foreground image).

An end-to-end training method can be adopted for the initial parameter prediction model, and the initial parameter prediction model can output the parameter map for $t1$ and the parameter map for $t2$ during the training process.

In some embodiments, in the process of training the initial parameter prediction model based on the sample information to obtain the target parameter prediction model, the following steps (1) to (4) need to be performed at least once, so as to obtain the target parameter prediction model:

(1) obtaining a target sample image from a plurality of sample images; wherein, the target sample image can be any sample image among a plurality of sample images.
Every time the above step (1) is executed, the target sample image acquired from a plurality of sample images may be different from the sample image acquired last time.
(2) inputting the target sample image into the initial parameter prediction model, so as to obtain the output parameter map of the target sample image output by the initial image processing model.
(3) determining the target loss function based on the output parameter map and the first parameter map corresponding to the target sample image.

In the case that in the training process, the initial parameter prediction model outputs a parameter map for t1 and/or a parameter map for t2:

The loss function of t1 can be calculated based on the parameter map for t1 output by the initial parameter prediction model and the parameter map for t1 as the label;

and/or,

The loss function of t2 can be calculated based on the parameter map for t2 output by the initial parameter prediction model and the parameter map for t2 as the label.

(4) The initial parameter prediction model is modified based on the target loss function.

In some embodiments, the target loss function comprises a first loss function corresponding to the foreground adjustment parameters (i.e. the loss function for t2); and/or a second loss function corresponding to the background adjustment parameters (i.e. the loss function based on t1). The initial parameter prediction model can be modified based on the loss function of t1 and/or the loss function of t2.

In the above embodiment, by calculating the target loss function to modify the initial parameter prediction model in each training process, the finally obtained target parameter prediction model can output an accurate target parameter map based on the image.

In some embodiments, a first opacity map of the foreground image of the target sample image can be determined based on the output parameter map; a second opacity map of the foreground image of the target sample image can be determined based on the first parameter map corresponding to the target sample image; a third loss function can be determined based on the first opacity map and the second opacity map; and the initial parameter prediction model can be modified based on the target loss function and the third loss function.

Furthermore, during the training process, after the initial parameter prediction model outputs the parameter map for t1, and the parameter map for t2, the predicted alpha can be calculated based on $\vec{I}$, the predicted alpha is the first opacity map as mentioned above, and can be expressed as alpha1.

The above-mentioned second opacity map is an opacity map (which can be expressed as alpha2) set for the foreground image of the target sample image as a label, and the alpha loss function (i.e. the above-mentioned third loss function) can be obtained based on alpha1 and alpha2.

In some embodiments, the initial parameter prediction model can be modified based on the third loss function, or based on the target loss function and the third loss function.

Among them, when the initial parameter prediction model is modified based on at least two of the first loss function, the second loss function and the third loss function as mentioned above, the weights can be set for the loss functions, and a total loss function can be obtained by weighted summation based on the weights, and the initial parameter prediction model can be modified based on the total loss function.

The weights for the first loss function, the second loss function and the third loss function can be set according to actual requirements, and are not limited in the embodiments of this disclosure. For example, the ratio of weights for the first loss function, the second loss function and the third loss function may be 1: 1: 1.

In the above embodiment, the initial parameter prediction model can be modified based on both of the target loss function and the third loss function, which can ensure that the final target parameter prediction model can output an accurate target parameter map based on the image, and an accurate opacity map of the foreground image can be calculated based on the output target parameter map.

In some embodiments, the target parameter map can be directly obtained by the target parameter prediction model. In an implementation manner, the first image can be input into the target parameter prediction model, so that the target parameter map output by the target parameter preset model can be acquired.

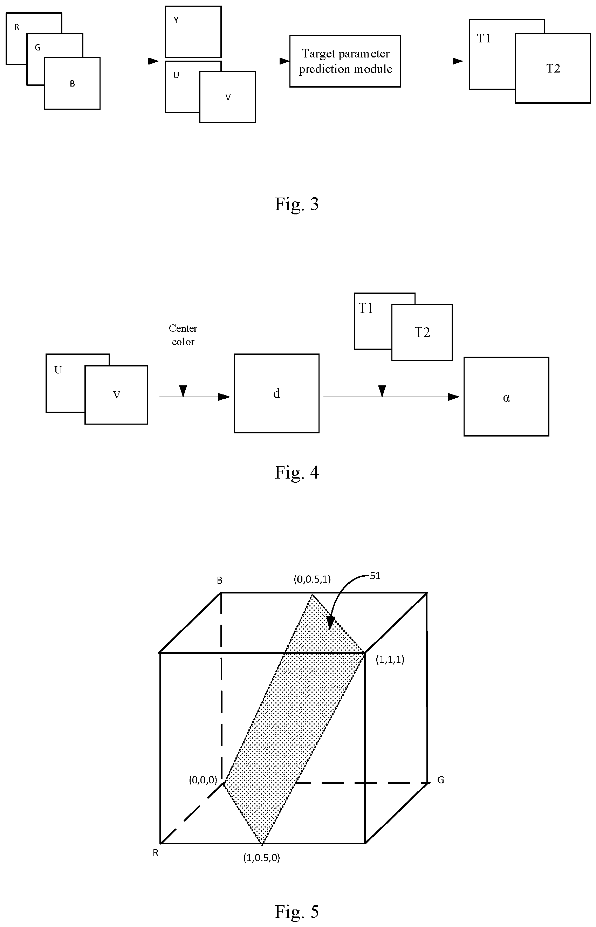

Fig. 3 is a schematic diagram of the process of acquiring the target parameter map according to the embodiment of the present disclosure. The acquired first image comprises three-channel images of R, G and B, and the RGB three-channel images can be mapped to YUV space to obtain three-channel images of Y, U and V. Then, the three-channel images of Y, U and V are input into the target parameter prediction model, and the target parameter prediction model finally outputs the target parameter map, that is, the parameter map T1 for t1, and the parameter map T2 for t2 in Fig. 3.

Usually, the distribution of transparency adjustment parameters in the target parameter map obtained with respect to the images in the green screen scene is gentle, so the target parameter map is insensitive to size scaling. Therefore, before the image is input into the target parameter prediction model, the original image can be downsampled to obtain a smaller-sized image, and then a target parameter map with smaller size (i.e., lower resolution) can be output through the above target parameter prediction model, and then be size-scaled to obtain a target parameter map with larger size (i.e., higher resolution). Then, alpha with high accuracy can be calculated based on the target parameter map with larger size. When the target parameter prediction model is a convolutional neural network, the calculation time of the target parameter prediction model has a strong correlation with the size scaling of the image. Therefore, by processing the smaller-sized image, it can achieve smaller output, faster calculation and no loss of obvious details.

It should be noted that the first image in the embodiment of the present disclosure may be an original image, or may refer to an image obtained after downsampling the original image.

103. determine a target opacity map for the foreground image in the first image, based on the transparency adjustment parameters for the at least part of pixels and center color distances of the at least part of pixels.

Among them, the center color distance is determined based the color values of pixels and the central color, and the central color refers to green color.

In the embodiment of the present disclosure, the target opacity map for the foreground image in the first image is calculated based on the transparency adjustment parameters for the at least part of pixels and center color distances of the at least part of pixels.

For each pixel in at least part of pixels in the first image, the opacity value of the foreground image for each pixel in at least part of pixels in the first image can be calculated based on the transparency adjustment parameters (t1 and/or t2) and the center color distance, that is, the target opacity map for the foreground image can be obtained.

Fig. 4 is a schematic diagram of calculating the target opacity map for the foreground image according to the embodiment of the present disclosure. As shown in Fig. 4, in the process of calculating the alpha of the first image, firstly, according to the selected center color, the distance between each pixel in the first image and the center color in UV space can be calculated to form a distance map d, which includes the center color distance of each pixel in the first image. Then, based on the distance map d, the parameter map T1 for t1 and the parameter map T2 for t2, the target opacity map for the first image can be calculated. In Fig. 4, the target opacity map for the first image is represented as $\alpha$.

In some embodiments, an initial opacity map for the foreground image in the first image is determined based on the transparency adjustment parameters for the at least part of pixels and center color distances of the at least part of pixels. Then, guide filtering is performed on the initial opacity map by taking a grayscale image of the first image as a guide image, to obtain the target opacity map. In real scenes, UV channels usually have the problems of high-frequency detail information loss and compression image quality loss, etc., so after the target parameter map is obtained based on the model as above, the above-mentioned initial opacity map calculated based on the opacity parameters in the target parameter map will also have such problems of high-frequency detail information loss, etc. Therefore, by performing the guide filtering on the initial parameter image based on the grayscale image of the first image, the grayscale image of the original image input to the above-mentioned target parameter prediction model can be taken as the guide image, so as to increase the details of opacity estimation based on the model, and smoothen the compression noises of the UV channels.

In the green screen matting method according to embodiments of the present disclosure, the transparency adjustment parameters for at least part of pixels in the first image can be obtained first by the target parameter prediction model, so that even for images with uneven illumination and uneven green screen, since local parameters (transparency adjustment parameters) are determined based on the pixels, and the target opacity map of the foreground image is determined based on these local parameters, the determined target opacity map of the foreground image can applied to any green scence matting scences, and the calculation result is more accurate.

104. calculate the foreground image based on the target opacity map and the color value of the first image.

In some embodiments, in the process of calculating the foreground image based on the target opacity map and the color value of the first image , the background (which can also be referred to as background image) in the first image can be first determined based on the target opacity map, and the color average of each pixel in the background image can be calculated to obtain the background color average. Then, the fusion opaque coefficient can be calculated based on the background color average and the color value of the current pixel. Next, the color value of the foreground image is calculated based on the fusion opaque coefficient, the color value of the first image and the color of the background image.

The color values of the first image include the color values of R channel, G channel and B channel of the first image.

In some embodiments, the manner of calculating the foreground image based on the target opacity map and the color value of the first image can be realized by the following steps 104a to 104b:

104a. obtain the fusion opaque coefficient.
the determining the fusion opaque coefficient for each pixel in at least part of pixels in the first image includes the following two cases:

1: determining that the fusion opaque coefficient is 1, when a color value of G channel in the first image is less than or equal to a target color value,
2: determining the fusion opaque coefficient based on a first color distance and a second color distance when the color value of the G channel in the first image is larger than the target color value, wherein the first color distance is a distance from the color value in the first image to a green limit boundary plane, and the second color distance is a distance from the color average in the background image to the green limit boundary plane;

wherein the target color value is half of the sum of color values of R channel and B channel, and the green limit boundary plane is a plane determined when the color value of G channel is equal to the target color value.

In RGB color space, the limit boundary at which green color can be visually perceived can be set as: G = (R+B)/2;

Where G can represent the color value in the G channel, R represents the color value in the R channel, and B represents the color value in the B channel.

Assuming that the fusion opaque coefficient is represented as alpha*, the first color distance is represented as Dr, and the second color distance is represented as Db, alpha* can be represented as:

$$\begin{cases} \text{alpha}^* = 1 & G \le {(R+G)}/{2} \\ \text{alpha}^* = \min\left(1, 1 - \dfrac{D_f}{D_b}\right) & G > {(R+G)}/{2} \end{cases}$$

Fig. 5 is a schematic diagram of a green limit boundary plane provided by the embodiment of the present disclosure. The cube in Fig. 5 can be regarded as an RGB color space. Generally, the limit boundary at which green color can be visually perceived can be roughly set as G=(R+B)/2, and in the RGB color space, it can be represented as the green limit boundary plane 51 as shown in Fig. 5, and the RGB coordinates of four vertices of the green limit boundary plane are (0,0,0), (0,0.5,1), (1,0.5,0), and (1,1,1).

104b. calculate the color value of the foreground image based on the fusion opaque coefficient, the color value of the first image and the color value of the background image.

In some embodiments, the calculating the color value of the foreground image based on the fusion opaque coefficient, the color value of the first image and the color value of the background image may be: calculating the color value of the foreground image according to the fusion opaque coefficient, the color value of the first image and the color value of the background image.

The color value of the first image is obtained by weighted summation of the color value of the foreground image and the color value of the background image based on the fusion opaque coefficient.

Wherein the color value of the first image is equal to the sum of the first product and the second product, the first product is the product of the fusion opaque coefficient and the color value of the foreground image, and the second product is the product of a difference obtained by 1 minus the fusion opaque coefficient and the color value of the background image.

In the above embodiment, it is considered that in the green screen scene, at green reflections at semi-transparent areas, segmented edges and foreground objects in the foreground image, the fusion opaque coefficient **alpha*** and its opacity **alpha** are different, instead of directly calculating the foreground image based on the opacity **alpha,** the fusion opaque coefficient **alpha*** is first calculated, and then the foreground image is calculated based on the alpha and color value of the foreground image calculated from **alpha*.** For such obtained foreground image, de-greening is performed for green reflections at semi-transparent areas, segmented edges and foreground objects, so as to achieve more natural foreground extraction in visual effects, for superimposing other backgrounds for material synthesis.

It should be noted that, in the embodiment of the present disclosure, the process of calculating the target opacity map of the foreground image in the first image and the process of calculating the foreground image belong to pixel-level operations, that is, the above operations are performed for each pixel in at least part of pixels in the image, to obtain the opacity map of the whole foreground image in the first image, and the whole foreground image is calculated.

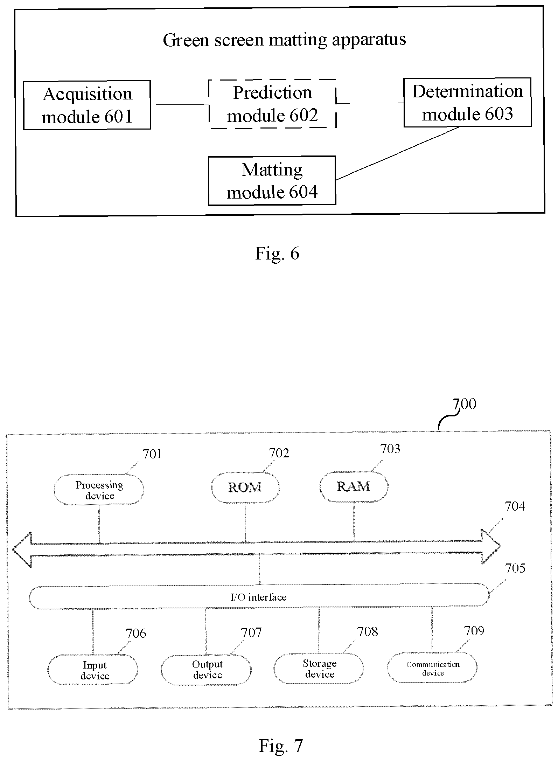

Fig. 6 is a structural block diagram of a green screen matting apparatus according to the embodiment of the present disclosure, the apparatus comprises:

an acquisition module 601 configured to acquire a first image;
a prediction module 602 configured to input the first image into a target parameter prediction model, and acquire a target parameter map based on the target parameter prediction model, wherein the target parameter map comprises transparency adjustment parameters for at least part of pixels in the first image;
a determination module 603 configured to determine a target opacity map for the foreground image in the first image, based on the transparency adjustment parameters for the at least part of pixels and center color distances of the at least part of pixels;
a matting module 604 configured to calculate the foreground image based on the target opacity map and a color value of the first image.

Wherein the center color distance is determined based on the color value of the pixel and the color value of the center color.

In some embodiments of the present disclosure, the transparency adjustment parameters comprise foreground adjustment parameters and/or background adjustment parameters.

In some embodiments of the present disclosure, the determination module 603 is specifically configured to: determine an initial opacity map for the foreground image in the first image, based on the transparency adjustment parameters for the at least part of pixels and center color distances of the at least part of pixels; perform guide filtering on the initial opacity map by taking a grayscale image of the first image as a guide image, to obtain the target opacity map.

In some embodiments of the present disclosure, the matting module 604 is specifically configured to:

acquire a fusion opaque coefficient;
calculate a color value of the foreground image, based on the fusion opaque coefficient, the color value of the first image, and a color value of the background image; and
calculate the foreground image based on the color value of the foreground image and the target opacity map.

In some embodiments of the present disclosure, the determination module 603 is specifically configured to:

determine that the fusion opaque coefficient is 1, when a color value of G channel in the first image is less than or equal to a target color value,
determine the fusion opaque coefficient based on a first color distance and a second color distance when the color value of the G channel in the first image is larger than the target color value, wherein the first color distance is a distance from the color value in the first image to a green limit boundary plane, and the second color distance is a distance from the background color average to the green limit boundary plane;
wherein the target color value is half of the sum of color values of R channel and B channel, and the green limit boundary plane is a plane determined when the color value of G channel is equal to the target color value.

In some embodiments of the present disclosure, the prediction module 602 is further configured to:

before inputting the first image into a target parameter prediction model, and acquiring a target parameter map based on the target parameter prediction model, train an initial parameter prediction model based on sample information to obtain the target parameter prediction model;
the sample information includes a plurality of sample images and a first parameter map corresponding to each sample image, wherein the sample images include a foreground image, a background image and a random green screen image; the first parameter map is a parameter map determined based on an UV coordinate vector of the foreground image pixels, an UV coordinate vector of the random green screen image pixels, and center color distances of the pixels; and/or, a parameter map determined based on an UV coordinate vector of the background image pixels, an UV coordinate vector of the random green screen image pixels, and center color distances of the pixels; the random green screen image is obtain by fusing color channels of the foreground image and the background image based on alpha of the foreground image; the background image is obtained by superimposing random green on a real picture.

In some embodiments of the present disclosure, the prediction module 602 is specifically configured to: execute the following steps at least once to obtain the target parameter prediction model:

acquiring a target sample image from the plurality of sample images, inputting the target sample image into the initial parameter prediction model, and acquiring an output parameter map of the target sample image output by the initial image processing model;
dtermining a target loss function based on the output parameter map and the first parameter map corresponding to the target sample image;
modifying the initial parameter prediction model based on the target loss function;
wherein, the target loss function comprises:

a first loss function corresponding to the foreground adjustment parameters;
and/or,
a second loss function corresponding to the background adjustment parameters.

In some embodiments of the present disclosure, the prediction module 602 is specifically configured to:

determine a first opacity map of the foreground image of the target sample image based on the output parameter map;
determine a second opacity map of the foreground image of the target sample image based on the first parameter map corresponding to the target sample image;
determine a third loss function based on the first opacity map and the second opacity map;

modify the initial parameter prediction model based on the target loss function and the third loss function.

It should be noted that the prediction module 602 is illustrated with a dotted line to indicate that the prediction module 602 is optional for the green screen matting apparatus according to the present disclosure, that is, the prediction module can be included in the green screen matting apparatus or outside the green screen matting apparatus, in which case the green screen matting apparatus acquires the prediction model for operation. And even if the prediction module is not included, the concept of the green screen matting apparatus according to the present disclosure is complete, and the aforementioned advantageous technical effects can be achieved.

It should be noted that the above respective modules are only logical modules classified according to specific functions that they implement, and are not used to limit the specific implementation, for example, they can be implemented by software, hardware or a combination of hardware and software. In actual implementation, the above respective modules can be realized as separate physical entities, or can be realized by a single entity (e.g., processor (CPU or DSP, etc.), integrated circuit, etc.). In addition, the above-mentioned respective modules being illustrated with dotted lines may indicate that such modules may not actually exist, but the operations/functions that they implement can be implemented by the apparatus or a processing circuit itself.

In addition, although not shown, the apparatus may also include a memory, which may store various kinds of information generated by the apparatus, various modules included in the apparatus in operation, programs and data for operation, data to be transmitted by a communication unit, and the like. The memory can be volatile memory and/or nonvolatile memory. For example, the memory may include, but is not limited to, random access memory (RAM), dynamic random access memory (DRAM), static random access memory (SRAM), read only memory (ROM) and flash memory. Of course, the memory can also be located outside the apparatus.

Fig. 7 illustrates a schematic structural diagram of an electronic device 700 according to the embodiment of the present disclosure, which is used for exemparily illustrating an electronic device suitable for implementing the green screen matting method according to the embodiment of the present disclosure, but shall not be interpreted as specific limitation to the embodiment of the present disclosure.

As shown in Fig. 7, the electronic device 700 may include a processing device (such as a central processing unit, a graphics processor, etc.) 701, which may perform various appropriate actions and processes according to a program stored in a read-only memory (ROM)702 or a program loaded into a random access memory (RAM)703 from a storage device 708. In the RAM 703, various programs and data required for the operation of the electronic device 700 are also stored. The processing device 701, the ROM 702, and the RAM 703 are connected to each other through a bus 704. An input/output (I/O) interface 705 is also connected to the bus 704.

Generally, the following devices can be connected to the I/O interface 705: an input device 706 including, for example, a touch screen, a touch panel, a keyboard, a mouse, a camera, a microphone, an accelerometer, a gyroscope, and the like; an output device 707 including, for example, a liquid crystal display (LCD), a speaker, a vibrator and the like; a storage device 708 including, for example, a magnetic tape, a hard disk, etc.; and a communication device 709. The communication device 709 may allow the electronic device 700 to perform wireless or wired communication with other devices so as to exchange data. Although Fig. 7 shows an electronic device 700 with various components, it should be understood that it is not required to implement or have all the devices shown. More or fewer devices may be implemented or provided instead.

Particularly, according to the embodiments of the present disclosure, the process described above with reference to the flowchart can be implemented as a computer software program. For example, embodiments of the present disclosure include a computer program product, which can include a computer program carried on a non-transitory computer readable medium, the computer program containing program codes for executing the method shown in the flowchart. In such an embodiment, the computer program can be downloaded and installed from the network via the communication device 709, or installed from the storage device 708 or installed from the ROM 702. When the computer program is executed by the processing device 701, the functions defined in the green screen matting method according to the embodiments of the present disclosure can be executed.

The embodiment of the present disclosure provides a computer-readable storage medium on which computer programs are stored, and the computer programs, when executed by a processor, implement each process of determining the green screen matting method according to the above method embodiments, and the same technical effect can be achieved, which will not be repeated here to avoid repetition.

Wherein the computer readable storage medium may be a Read-Only Memory (ROM), a Random Access Memory (RAM), a magnetic disk or an optical disk, etc.

The embodiment of the present disclosure provides a computer program product, which stores a computer program. The computer program, when executed by a processor, implements each process of determining the green screen matting method according to the above method embodiment, and the same technical effect can be achieved, which will not be repeated here to avoid repetition.

The embodiment of the present disclosure also provides a computer program. The program code included in the computer program, when executed by a computer, implements each process of determining the green screen matting method according to the above method embodiment, and the same technical effect can be achieved, which will not be repeated here to avoid repetition.

It should be understood by those skilled in the art that the embodiments of the present disclosure can be provided as methods, systems, or computer program products. Therefore, the present disclosure may take the form of an entirely hardware embodiment, an entirely software embodiment, or an embodiment combining software and hardware aspects. Furthermore, the present disclosure may take the form of a computer program product implemented on one or more computer usable storage media having computer usable program codes embodied therein.

In this disclosure, the processor may be a Central Processing Unit (CPU), other general-purpose processors, Digital Signal Processor (DSP), application specific integrated circuits (application specific integrated circuits, ASIC), Field-Programmable Gate Array (FPGA) or other programmable logic devices, discrete gate or transistor logic devices, discrete hardware components, etc. The general-purpose processor can be a microprocessor, or the processor can be any conventional processor or the like.

In this disclosure, the memory may include the forms of non-permanent memory, random access memory (RAM) and/or non-volatile memory in computer-readable media, such as read-only memory (ROM) or flash RAM. Memory is an example of a computer readable medium.

In this disclosure, computer-readable media include permanent and non-permanent, removable and non-removable storage media. The storage medium can realize information storage by any method or technology, and the information can be computer readable instructions, data structures, modules of programs or other data. Examples of computer storage media include, but not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, CD-ROM, DVD or other optical storage, magnetic cassette, magnetic disk storage, or other magnetic storage or any other non-transmission media, which can be used for storing information accsssed by a computing device. According to the definition herein, the computer readable media do not include transitory media, such as modulated data singal and carrier.

It should be noted that in this paper, relational terms such as "first" and "second" are only used to distinguish one entity or operation from another entity or operation, and do not necessarily require or imply any actual relationship or order between these entities or operations. Furthermore, the terms "include", "including" or any other variant thereof are intended to cover non-exclusive inclusion, so that a process, method, article or equipment that includes a series of elements includes not only those elements, but also other elements not explicitly listed, or elements inherent to such process, method, article or equipment. Without further limitation, the element defined by the sentence "including a ... ... " does not exclude that there are other identical elements in the process, method, article or equipment including the element.

What has been described above is only a specific embodiment of the present disclosure, so that those skilled in the art can understand or realize the present disclosure. Many modifications to these embodiments will be obvious to those skilled in the art, and the general principles defined herein can be implemented in other embodiments without departing from the spirit or scope of this disclosure. Therefore, the present disclosure will not be limited to the embodiments described herein, but is to be accorded the widest scope consistent with the principles and novel features disclosed herein.

**Claims**

1. A green screen matting method, comprising:

   acquiring a first image;
   inputting the first image into a target parameter prediction model, and acquiring a target parameter map based on the target parameter prediction model, wherein the target parameter map comprises transparency adjustment parameters for at least part of pixels in the first image;
   determining a target opacity map for the foreground image in the first image, based on the transparency adjustment parameters for the at least part of pixels and center color distances of the at least part of pixels;
   calculating the foreground image based on the target opacity map and a color value of the first image.

2. The method of claim 1, wherein the transparency adjustment parameters comprise foreground adjustment parameters and/or background adjustment parameters.

3. The method of claim 1, wherein the determining a target opacity map for the foreground image in the first image, based on the transparency adjustment parameters for the at least part of pixels and center color distances of the at least part of pixels comprises:

determining an initial opacity map for the foreground image in the first image, based on the transparency adjustment parameters for the at least part of pixels and center color distances of the at least part of pixels;

performing guide filtering on the initial opacity map by taking a grayscale image of the first image as a guide image, to obtain the target opacity map.

4. The method of claim 1, wherein the calculating the foreground image based on the target opacity map and a color value of the first image comprises:

acquiring a fusion opaque coefficient;

calculating a color value of the foreground image, based on the fusion opaque coefficient, the color value of the first image, and a color value of the background image.

5. The method of claim 4, wherein the acquiring a fusion opaque coefficient comprises:

determining that the fusion opaque coefficient is 1, when a color value of G channel in the first image is less than or equal to a target color value,

determining the fusion opaque coefficient based on a first color distance and a second color distance when the color value of the G channel in the first image is larger than the target color value, wherein the first color distance is a distance from the color value in the first image to a green limit boundary plane, and the second color distance is a distance from the background color average to the green limit boundary plane;

wherein the target color value is half of the sum of color values of R channel and B channel, and the green limit boundary plane is a plane determined when the color value of G channel is equal to the target color value.

6. The method of claim 1, wherein, before inputting the first image into a target parameter prediction model, and acquiring a target parameter map based on the target parameter prediction model, the method further comprises:

training an initial parameter prediction model based on sample information to obtain the target parameter prediction model;

the sample information includes a plurality of sample images and a first parameter map corresponding to each sample image, wherein the sample images include a foreground image, a background image and a random green screen image; the first parameter map is a parameter map determined based on an UV coordinate vector of the foreground image pixels, an UV coordinate vector of the random green screen image pixels, and center color distances of the pixels; and/or, a parameter map determined based on an UV coordinate vector of the background image pixels, an UV coordinate vector of the random green screen image pixels, and center color distances of the pixels; the random green screen image is obtain by fusing color channels of the foreground image and the background image based on alpha of the foreground image; the background image is obtained by superimposing random green on a real picture.

7. The method of claim 6, wherein the training an initial parameter prediction model based on sample information to obtain the target parameter prediction model comprises:
executing the following steps at least once to obtain the target parameter prediction model:

acquiring a target sample image from the plurality of sample images, inputting the target sample image into the initial parameter prediction model, and acquiring an output parameter map of the target sample image output by the initial image processing model;

dtermining a target loss function based on the output parameter map and the first parameter map corresponding to the target sample image;

modifying the initial parameter prediction model based on the target loss function;

wherein, the target loss function comprises:

a first loss function corresponding to the foreground adjustment parameters;
and/or,
a second loss function corresponding to the background adjustment parameters.

8. The method of claim 7, wherein the modifying the initial parameter prediction model based on the target loss function includes:

determining a first opacity map of the foreground image of the target sample image based on the output parameter map;

determining a second opacity map of the foreground image of the target sample image based on the first parameter map corresponding to the target sample image;

determining a third loss function based on the first opacity map and the second opacity map;

modifying the initial parameter prediction model based on the target loss function and the third loss function.

9. The method of claim 8, wherein the modifying the initial parameter prediction model based on the target loss function and the third loss function comprises:

performing weighted summation of the target loss function and the third loss function based on weights to obtain a total loss function, and

modifying the initial parameter prediction model based on the total loss function.

10. The method of any of claims 1-3, wherein, the alpha of the foreground image is equal to the product of a target difference and a global matting smoothness parameter as the transparency adjustment parameter, wherein the target difference is the difference between the center color distance of the pixel and the global matting intensity parameter; or

the alpha of the foreground image is equal to the ratio of a first difference and the second difference, the first difference is the difference between the center color distance of the pixel and a background adjustment parameter included in the transparency adjustment parameter, and the second difference is the difference between the foreground adjustment parameter and the background adjustment parameter included in the transparency adjustment parameter.

11. A green screen matting apparatus, comprising:

an acquisition module configured to acquiring a first image;

a prediction module configured to input the first image into a target parameter prediction model, and acquiring a target parameter map based on the target parameter prediction model, wherein the target parameter map comprises transparency adjustment parameters for at least part of pixels in the first image;

a determination module configured to determine a target opacity map for the foreground image in the first image, based on the transparency adjustment parameters for the at least part of pixels and center color distances of the at least part of pixels;

a matting module configured to calculate the foreground image based on the target opacity map and a color value of the first image.

12. An electronic device, comprising: a processor, and a memory on which computer programs executable on the processor are stored, the computer programs, when executed by the processor, implement the green screen matting method of any of claims 1-10.

13. A computer-readable storage medium, on which computer programs are stored, the computer programs, when executed by a processor, implement the green screen matting method of any of claims 1-10.

Fig. 1

Fig. 2

Fig. 3

Fig. 4

Fig. 5

Green screen matting apparatus

| Acquisition module 601 | Prediction module 602 | Determination module 603 |

Matting module 604

Fig. 6

700

701    702    703

Processing device    ROM    RAM

704

705

I/O interface

706    707    708    709

Input device    Output device    Storage device    Communication device

Fig. 7

## INTERNATIONAL SEARCH REPORT

| International application No. |
| --- |
| **PCT/CN2023/085016** |

| A. | CLASSIFICATION OF SUBJECT MATTER |
| --- | --- |

G06T7/11(2017.01)i;  G06T7/12(2017.01)i;  G06T7/194(2017.01)i

According to International Patent Classification (IPC) or to both national classification and IPC

| B. | FIELDS SEARCHED |
| --- | --- |

Minimum documentation searched (classification system followed by classification symbols)

IPC：G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 图像, 抠图, 前景, 背景, 参数, 调节, 调整, 预测, 模型, 像素, 透明度, 颜色, 距离, image, matting, foreground, background, parameter, adjust, forecast, model, pixel, transparency, color, distance

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 114937050 A (BEIJING BYTEDANCE NETWORK TECHNOLOGY CO., LTD.) 23 August 2022 (2022-08-23) <br> claims 1-10, and description, paragraphs [0033]-[0037], [0069]-[0070], and [0101] | 1-13 |
| X | CN 112330531 A (GUANGZHOU BOGUAN INFORMATION SCIENCE & TECHNOLOGY CO., LTD.) 05 February 2021 (2021-02-05) <br> description, paragraphs [0003]-[0057], and [0063]-[0120] | 1-13 |
| A | CN 111223108 A (SHANGHAI ENJOY INFORMATION TECHNOLOGY CO., LTD.) 02 June 2020 (2020-06-02) <br> entire document | 1-13 |
| A | CN 111862110 A (LIAONING SUNFLOWER EDUCATION TECHNOLOGY CO., LTD.) 30 October 2020 (2020-10-30) <br> entire document | 1-13 |
| A | CN 113034509 A (BEIJING DAJIA INTERCONNECTION INFORMATION TECHNOLOGY CO., LTD.) 25 June 2021 (2021-06-25) <br> entire document | 1-13 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 June 2023** | **19 June 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/085016** |

**C.  DOCUMENTS CONSIDERED TO BE RELEVANT**

| Category* | Citation of document, with indication, where appropriate, of the relevant passages | Relevant to claim No. |
| --- | --- | --- |
| A | CN 113052868 A (ORBBEC 3D TECHNOLOGY INTERNATIONAL INC.) 29 June 2021 (2021-06-29)<br>    entire document | 1-13 |
| A | US 2012169722 A1 (SAMSUNG ELECTRONICS CO., LTD.) 05 July 2012 (2012-07-05)<br>    entire document | 1-13 |

Form PCT/ISA/210 (second sheet) (July 2022)

**INTERNATIONAL SEARCH REPORT**
Information on patent family members

International application No.

**PCT/CN2023/085016**

| Patent document cited in search report | | | Publication date (day/month/year) | Patent family member(s) | | | Publication date (day/month/year) |
|---|---|---|---|---|---|---|---|
| CN | 114937050 | A | 23 August 2022 | None | | | |
| CN | 112330531 | A | 05 February 2021 | None | | | |
| CN | 111223108 | A | 02 June 2020 | None | | | |
| CN | 111862110 | A | 30 October 2020 | None | | | |
| CN | 113034509 | A | 25 June 2021 | None | | | |
| CN | 113052868 | A | 29 June 2021 | None | | | |
| US | 2012169722 | A1 | 05 July 2012 | KR | 20120078924 | A | 11 July 2012 |
| | | | | KR | 101798408 | B1 | 20 November 2017 |
| | | | | US | 9445071 | B2 | 13 September 2016 |
| | | | | JP | 2012141975 | A | 26 July 2012 |
| | | | | JP | 5789185 | B2 | 07 October 2015 |

Form PCT/ISA/210 (patent family annex) (July 2022)

**EP 4 322 109 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202210751949X